# EUROPÄISCHE PATENTSCHRIFT

(11) **EP 3 453 245 B1**
(45) Veröffentlichungstag und Bekanntmachung des Hinweises auf die Patenterteilung: **10.03.2021**
(21) Anmeldenummer: 18179252.4
(22) Anmeldetag: 22.06.2018
(51) Int. Cl.: B60R 11/00, A01D 41/12, A01D 67/04, B60R 11/02

(54) **LANDWIRTSCHAFTLICHE ARBEITSMASCHINE**
AGRICULTURAL MACHINE
ENGIN AGRICOLE

(30) Priorität: 08.09.2017 DE 102017120792
(43) Veröffentlichungstag der Anmeldung: 13.03.2019
(73) Patentinhaber: CLAAS Selbstfahrende Erntemaschinen GmbH, 33428 Harsewinkel (DE)
(72) Erfinder: Tepper, Andreas, 48231 Warendorf (DE); Klaeffmann, Bernd, 33428 Harsewinkel (DE); Heidecker, Udo, 49186 Bad Iburg (DE)
(74) Vertreter: CLAAS Gruppe

(56) Entgegenhaltungen:
- EP-B1- 2 211 081
- WO-A1-96/05081
- US-A- 4 854 538
- US-A- 6 039 141
- US-A1- 2003 057 749
- US-A1- 2003 230 447
- US-A1- 2007 145 219

## Beschreibung

Die Erfindung betrifft eine landwirtschaftliche Arbeitsmaschine gemäß Anspruch 1.

Grundsätzlich sind verschiedene landwirtschaftliche Arbeitsmaschinen aus dem Stand der Technik bekannt. Dies können landwirtschaftliche Zugmaschinen, wie beispielsweise Traktoren, oder landwirtschaftliche Erntemaschinen, wie beispielsweise Mähdrescher oder Feldhäcksler, sein. Diese weisen zumeist einen Sitz für einen Bediener der landwirtschaftlichen Arbeitsmaschine und einen Monitor zum Anzeigen von Betriebsdaten der landwirtschaftlichen Arbeitsmaschine auf. In der EP 2 211 081 B1 ist beispielsweise eine Armlehne für einen Sitz einer landwirtschaftlichen Arbeitsmaschine beschrieben, an der ein Monitor zum Anzeigen von Betriebsdaten angeordnet ist. Der Monitor wird von einer Halteeinrichtung getragen, die ein Kippen des Monitors in zwei Achsen erlaubt.

Hierdurch kann der Monitor je nach den gegebenen Lichtverhältnissen so verschwenkt werden, dass dieser den Bediener nicht blendet.

Nachteilig an dieser Halteeinrichtung ist, dass sie nur sehr eingeschränkt eine Anpassung an die Ergonomie des Bedieners erlaubt, da im Wesentlichen nur die Neigung nach vorne und hinten sowie nach links und rechts einstellbar ist.

Aus der US20030230447 ist eine Monitorhalterung bekannt geworden, die ein Schwenken des Monitors um horizontale Achsen ermöglicht, sodass der Monitor in Abstand, Neigung und Höhe zum Bediener einstellbar ist. Nachteilig an einer derartigen Ausführung ist, dass ein Schwenken in und aus dem Arbeitsbereich und eine Verschiebung des Monitors in der Höhe nicht möglich ist.

Der Erfindung liegt damit die Aufgabe zugrunde, die bekannte landwirtschaftliche Arbeitsmaschine derart auszugestalten und weiterzubilden, dass die Bedien-Ergonomie für den Bediener gesteigert wird.

Gelöst wird die obige Aufgabe durch eine landwirtschaftliche Arbeitsmaschine mit den Merkmalen des Anspruchs 1.

Dadurch, dass eine verstellbare Halteeinrichtung, welche den Monitor hält und eine Verstellung des Monitors gegenüber dem Sitz in seiner Höhe, seiner Neigung und seinem Abstand erlaubt, kann eine Bedieneinheit geschaffen werden, welche den Ergonomie-, Brems-, Fahr-, Sicht- und Blendanforderungen entspricht.

Gemäß einer Weiterbildung der Erfindung ist der Monitor als Touchscreen-Monitor ausgebildet (Anspruch 2). Dann sind mit diesem nicht nur Betriebsdaten der landwirtschaftlichen Arbeitsmaschine und/oder eines Anbaugeräts anzeigbar, sondern Betriebsdaten, insbesondere Betriebsparameter, der landwirtschaftlichen Arbeitsmaschine und/oder eines Anbaugeräts können auch einfach und flexibel eingestellt und/oder abgerufen werden.

Die Ansprüche 3 bis 7 beschreiben die Verstellbarkeit der Halteeinrichtung zur Verstellung des Monitors. Sie ermöglichen eine bessere Anpassung des Monitors an die Bediensituation für den Bediener und insbesondere auch ein Verschwenken des Monitors aus dem Sichtbereich des Bedieners auf die Arbeitsorgane und/oder den Feldbestand.

In den Ansprüchen 8 bis 11 sind der Sitz und bevorzugte Arten der Befestigung der Halteeinrichtung in der landwirtschaftlichen Arbeitsmaschine beschrieben, durch welche die Bedien-Ergonomie weiter gesteigert werden kann.

Im Folgenden wird die Erfindung anhand einer lediglich Ausführungsbeispiele darstellenden Zeichnung näher erläutert. In der Zeichnung zeigt
- Fig. 1: eine schematische, vorschlagsgemäße landwirtschaftliche Arbeitsmaschine mit einer Detailansicht der Fahrerkabine,
- Fig. 2: eine schematische, perspektivische Ansicht eines Sitzes mit der Halteeinrichtung und dem Monitor und
- Fig. 3: eine andere schematische, perspektivische Ansicht der Halteeinrichtung und des Monitors.

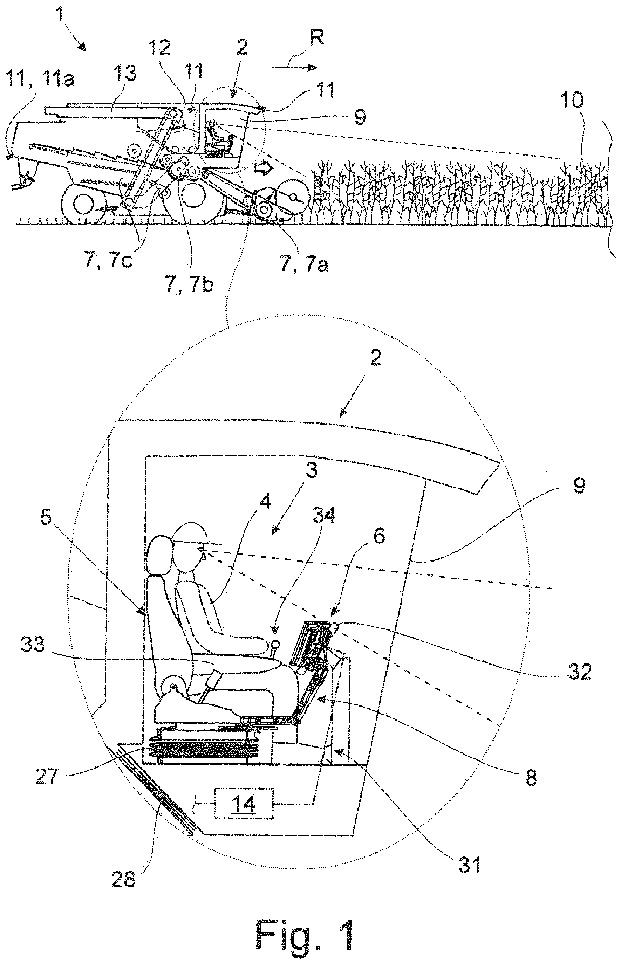

In der Fig. 1 ist eine landwirtschaftliche Arbeitsmaschine 1 gezeigt. Im Ausführungsbeispiel der Figuren ist es eine Erntemaschine, hier ein Mähdrescher. Die landwirtschaftliche Arbeitsmaschine 1 kann alternativ auch ein Feldhäcksler und/oder eine landwirtschaftliche Zugmaschine wie beispielsweise ein Traktor sein.

Die landwirtschaftliche Arbeitsmaschine 1 weist hier und vorzugsweise eine Kabine 2 auf. In der Kabine 2 ist ein Arbeitsplatz 3 für einen Bediener 4, hier den Fahrer, der landwirtschaftlichen Arbeitsmaschine 1, angeordnet.

Die landwirtschaftliche Arbeitsmaschine 1, insbesondere die Kabine 2, weist einen Sitz 5 für einen Bediener 4 der landwirtschaftlichen Arbeitsmaschine 1 auf. Der Sitz 5 ist hier auf dem Boden B der Kabine 2 befestigt. Ferner ist ein Monitor 6 zum Anzeigen von Betriebsdaten der landwirtschaftlichen Arbeitsmaschine 1, insbesondere ihrer Arbeitsorgane 7, und/oder eines Anbaugeräts der landwirtschaftlichen Arbeitsmaschine 1 vorgesehen. Diese Betriebsdaten können beispielsweise Betriebsparameter eines Arbeitsorgans 7 der landwirtschaftlichen Arbeitsmaschine 1 und/oder eines Anbaugeräts der landwirtschaftlichen Arbeitsmaschine 1 sein. Beispielsweise können sie Betriebsparameter eines Schneidwerks 7a, eines Dreschwerks 7b, einer Reinigungseinrichtung 7c oder dergleichen sein. Vorzugsweise weist der Monitor 6 ein LCD-Display und/oder OLED-Display auf.

Gehalten wird der Monitor 6 durch eine verstellbare Halteeinrichtung 8. Durch die Verstellung der Halteeinrichtung 8 kann der Monitor 6 gegenüber dem Sitz 5 in seiner Höhe H, seiner Neigung N und in seinem Abstand A verstellt werden. Hierdurch kann die Position und Ausrichtung des Monitor 6 nicht nur an verschiedene Lichtverhältnisse angepasst werden, um ein Blenden des Bedieners 4 zu vermeiden, sondern die Position und Ausrichtung des Monitors 6 kann auch an die ergonomischen Anforderungen des Bedieners 4 und der von ihm durchzuführenden Arbeitsaufgabe sowie die Sichtanforderung angepasst werden.

Zusätzlich kann die vorschlagsgemäße Halteeinrichtung 8 auch bei Fahrmanövern sicher ihre Position halten, so dass sie auch den Fahr- und Bremsanforderungen der landwirtschaftlichen Arbeitsmaschine 1 entspricht. Dies ist von besonderer Bedeutung, da landwirtschaftliche Arbeitsmaschinen 1 zumeist nicht nur auf Straßen, sondern gerade auch im Gelände, wie beispielsweise auf Feldern und/oder im Wald eingesetzt werden, wo die Bodenunebenheiten erheblich größer als auf Straßen sind und deshalb an die Stabilität und Festigkeit der Halteeinrichtung 8 besondere Anforderungen zu stellen sind.

Durch die Verstellbarkeit des Monitors 6 relativ zum Sitz 5 kann dieser auch sehr leicht und flexibel an verschiedene Arbeitssituationen angepasst werden. So ist es beispielsweise möglich, dass der Bediener 4 den Monitor 6 vor sich hinschwenkt und/oder zu sich heranzieht, um vor einer durchzuführenden Arbeitsaufgabe die Arbeitsorgane 7 auf diese hin einzustellen. Anschließend kann er diesen aus seinem direkten Sichtbereich herausschwenken, um durch die Fenster 9 der Kabine 2 freie Sicht auf den Feldbestand 10 und/oder Arbeitsorgane 7 bzw. Anbaugeräte zu haben. Vorzugsweise ist der Monitor 6 derart seitlich verschwenkbar, dass er dem auf dem Sitz 5 sitzenden Bediener 4 den Blick in das Schneidwerk 7a oder auf das Stoppelbild vor der landwirtschaftlichen Arbeitsmaschine 1 freigibt.

Im Ausführungsbeispiel und vorzugsweise ist der Monitor 6 als Touchscreen-Monitor ausgebildet. Mit diesem können Betriebsdaten, insbesondere Betriebsparameter, der landwirtschaftlichen Arbeitsmaschine 1, insbesondere ihrer Arbeitsorgane 7, und/oder eines Anbaugeräts eingestellt und/oder abgerufen werden. Weist die landwirtschaftliche Arbeitsmaschine 1 auch eine Kamera 11 auf, können zusätzlich oder alternativ die Videodaten der Kamera 11 abgerufen werden. Eine solche Kamera 11 kann beispielsweise am oder im Korntank 12 zur Beobachtung des Füllstands desselben und/oder der Qualität des Korns darin und/oder am Überladerohr 13 zur Beobachtung eines Überladevorgangs vorgesehen sein. Die Kamera 11 oder eine der Kameras 11 kann aber beispielsweise auch eine Rückfahrkamera 11a sein.

Besonders bevorzugt zeigt der Monitor 6 nicht nur das Kamerabild an, sondern gleichzeitig auch Betriebsparameter, mit welchen auf den im Kamerabild angezeigten Vorgang eingewirkt werden kann. Diese können hier und vorzugsweise im Falle eines Touchscreen-Monitors je nach Anforderung einfach angepasst werden.

Um einen Zugriff und ein Einstellen und/oder Abrufen der Betriebsparameter zu ermöglichen, ist der Monitor 6 hier und vorzugsweise datentechnisch mit einem Hauptrechner 14 der landwirtschaftlichen Arbeitsmaschine 1 verbunden.

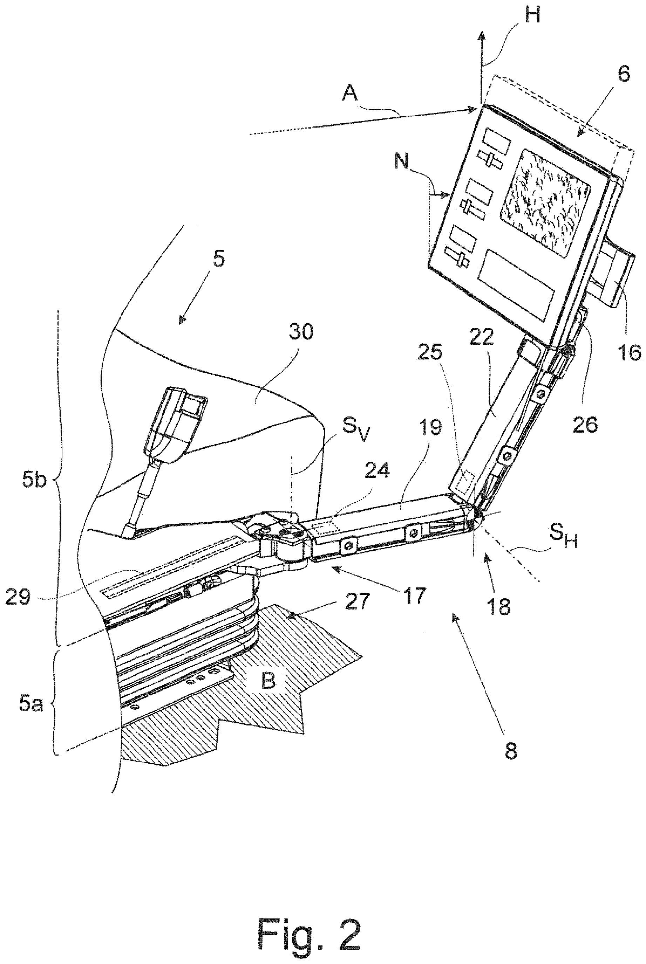

Die Höhenverstellung ist hier und vorzugsweise derart realisiert, dass der Monitor 6 von einer ersten Position in eine sich in der Höhe von der ersten Position unterscheidende zweite Position verstellbar ist, in der der Monitor 6 zur ersten Position parallelverschoben ist. Dies ist in Strichpunktlinien in der Fig. 2 dargestellt. Hier ist der Monitor 6 nicht nur parallelverschoben, sondern in einer Ebene verschoben.

Dazu weist hier die Halteeinrichtung 8 eine Lineareinheit 15 auf, mittels welcher die Höhe des Monitors 6 translatorisch entlang einer Linearachse L verstellbar ist. Die Lineareinheit 15 weist vorzugsweise zwei Führungsschienen 15a, 15b auf, welche die Verstellbewegung des Monitors 6 entlang der Linearachse L führen. Der Monitor 6 kann über die Verstellbewegung des Monitors 6 abbremsende und/oder unterstützende Federn der Lineareinheit 15 gelagert sein.

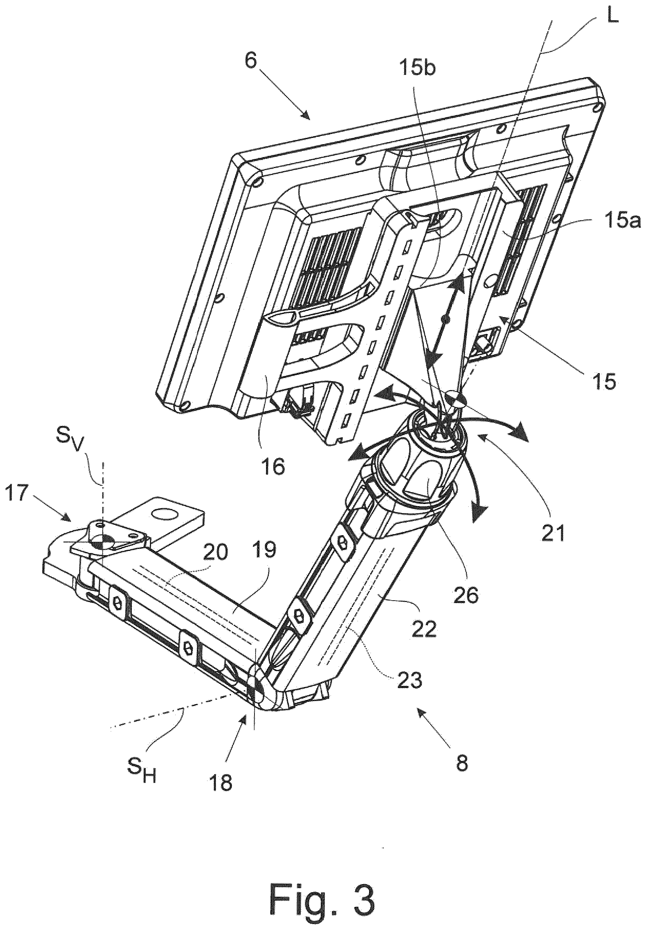

Die Lineareinheit 15 ist ausgehend vom monitorabgewandten, d. h. monitorfernen, Ende der Halteeinrichtung 8 das letzte kinematische Verstellglied der Halteeinrichtung 8. Dies ist in der Fig. 3 gezeigt. Die Lineareinheit 15 weist hier einen Hebel 16 zum Verriegeln und Entriegeln der Lineareinheit 15 auf. Hierdurch wird sichergestellt, dass sich der Monitor 6 bei den Vibrationen während des Betriebs der landwirtschaftlichen Arbeitsmaschine 1 nicht verstellt. Gleichzeitig kann er, wenn dies gewünscht ist, jedoch besonders einfach, und insbesondere einhändig, durch Entriegeln, Verstellen und anschließendes Verriegeln mittels des Hebels 16 besonders einfach verstellt werden. Durch eine Verriegelung mit dem Hebel 16 wird die Wirkung der Federn der Lineareinheit 15 vorzugsweise ausgeschaltet. Sie wirken nur abbremsend und/oder unterstützend bei einer entriegelten Lineareinheit 15.

Am monitorabgewandten Ende weist die Halteeinrichtung 8, wie in der Fig. 2 gezeigt, ein erstes Schwenkgelenk 17 zum Schwenken des Monitors 6 um eine im Wesentlichen vertikale Schwenkachse Sv auf. Vorzugsweise ist der Monitor 6 in Fahrtrichtung R im Wesentlichen vor den Sitz 5 verschwenkbar. In einer solchen Position ist das Eingeben und/oder Abrufen von Betriebsparametern der Arbeitsorgane 7 und/oder Anbaugeräte besonders komfortabel. Insbesondere lassen sich in dieser Position Betriebsparameter für einen bevorstehenden Erntevorgang besonders gut eingeben. Während der Ernte ist eine besonders gute Sicht auf die Ernteaggregate, insbesondere das Schneidwerk 7a wiederum von besonderer Bedeutung. Deshalb ist hier und vorzugsweise die Halteeinrichtung 8 seitlich zur Fahrtrichtung R hin verschwenkbar. Dann gibt sie den Blick auf die Ernteaggregate, insbesondere das Schneidwerk 7a, frei. In einer bevorzugten Ausgestaltung ist die Halteeinrichtung 8 seitlich zwischen 45° und 90° zur Fahrtrichtung R verschwenkbar.

Die Halteeinrichtung 8 weist ferner ein zweites Schwenkgelenk 18 zum Schwenken des Monitors 6 um eine im Wesentlichen horizontale Schwenkachse S_{H} auf. Auf diese Weise kann der Abstand des Monitors 6 zum Bediener 4 auf besonders einfache und praktikable Art und Weise eingestellt werden. Das zweite Schwenkgelenk 18 ist vom monitorabgewandten Ende aus hinter dem ersten Schwenkgelenk 17 angeordnet. Zwischen den beiden Schwenkgelenken 17, 18 ist hier ein Tragarm 19, insbesondere stabförmiger Tragarm, angeordnet, welcher hier und vorzugsweise einen Kabelkanal 20 zum Führen eines Kabels, vorzugsweise vom Sitz 4, zum Monitor 6 aufweist.

Wie in der Fig. 3 gezeigt, weist die Halteeinrichtung 8 ferner ein Kugelgelenk 21 zum Verstellen der Neigung des Monitors 6 gegenüber dem Sitz 5 auf. Hier und vorzugsweise weist das Kugelgelenk 21 drei Freiheitsgrade auf. Es erlaubt ein Drehen des Monitors 6 sowie ein Neigen desselben in zwei Richtungen. Dies ist in der Fig. 3 gezeigt. Zwischen dem Kugelgelenk 21 und dem zweiten Schwenkgelenk 18 ist hier ein Tragarm 22, insbesondere stabförmiger Tragarm, vorgesehen. Auch dieser weist einen Kabelkanal 23 zur Führung eines Kabels, vorzugsweise vom Sitz 4, zum Monitor 6 auf.

Hier und vorzugsweise kann die notwendige Verstellkraft des ersten Schwenkgelenks 17 und/oder des zweiten Schwenkgelenks 18 und/oder des Kugelgelenks 21 jeweils mittels eines Einstellelements 24, 25, 26 eingestellt werden. Dies ermöglicht eine Anpassung der zu überwindenden Kraft zum Verstellen des Monitors 6 in Abhängigkeit von der während des Betriebs der landwirtschaftlichen Arbeitsmaschine 1 auftretenden Erschütterungen und/oder Beschleunigungen aufgrund von Fahr-, Wende- oder Bremsmanövern. Das mindestens eine Schwenkgelenk 17, 18 und/oder das Kugelgelenk 21, hier beide Schwenkgelenke 17, 18 und das Kugelgelenk 21, halten im Betrieb der landwirtschaftlichen Arbeitsmaschine 1 den Monitor 6 in seiner Position relativ zum Sitz 5. Sie sind einzeln oder in Kombination ohne das Lösen von Stellelementen, wie beispielsweise Klemmschrauben, verstellbar. Im Ausführungsbeispiel ist die Halteeinrichtung 8 einhändig verstellbar.

Wie die Fig. 2 zeigt, weist der Sitz 5 ein Dämpfungselement 27 zum Abfedern von Bodenunebenheiten auf. Hier und vorzugsweise ist dieses zusätzlich zu einer ggf. vorgesehenen Kabinenfederung 28 vorgesehen, welche die Kabine 2 gegenüber Bodenunebenheiten abfedert. Wie der Fig. 2 weiter zu entnehmen ist, ist die Halteeinrichtung 8 am Sitz 5 vertikal oberhalb des Dämpfungselements 27 befestigt. Hierdurch werden die Vibrationen, welche auf einen auf dem Sitz 5 sitzenden Bediener 4 übertragen werden, in der gleichen Weise gedämpft auch auf den Monitor 6 übertragen. Insbesondere hohe Schwingungsfrequenzen, welche insbesondere auf die Arbeitsorgane 7 oder den Motor der landwirtschaftlichen Arbeitsmaschine 1 zurückgehen, können so wirksam herausgefiltert werden. Der Bediener 4 und der Monitor 6 bewegen sich dann in einem gemeinsamen Bezugssystem. Dies erleichtert insbesondere die Eingabe auf dem Touchscreen-Monitor, da Erschütterungen in gleicher Weise sowohl auf den Bediener 4 als auch auf den Monitor 6 übertragen werden. Diese haben dadurch erheblich geringere Auswirkungen, als wenn der Monitor 6 beispielsweise an der Kabine 2 befestigt wäre.

Der Sitz 5 weist ferner einen feststehenden Teil 5a und einen vertikal darüber angeordneten verstellbaren Teil 5b auf. Der verstellbare Teil 5b ist hier vorzugsweise auf, insbesondere horizontalen, Verstellschienen 29 verstellbar. Er ermöglicht eine Tiefenverstellung der Sitzfläche 30, um den Abstand zu einer Pedalerie 31 und/oder einem Lenkrad 32 der landwirtschaftlichen Arbeitsmaschine 1 zu ermöglichen. Auf diese Weise kann der Arbeitsplatz 3 auf unterschiedlich große Bediener 4 eingestellt werden. Besonderes bevorzugt ist das erste Schwenkgelenk 17 im Bereich der Verstellschienen 29 am feststehenden Teil 5a oder am verstellbaren Teil 5b des Sitzes 5 angeordnet. Hier und vorzugsweise bedeutet "im Bereich", dass das erste Schwenkgelenk 17 maximal 20 cm, vorzugsweise maximal 10 cm, weiter vorzugsweise maximal 5 cm, zu den Verstellschienen 29 beabstandet angeordnet ist. Dies ermöglicht eine besonders ergonomische Anordnung des ersten Schwenkgelenks 17 in der Nähe der Sitzfläche 30. Hierdurch kann der Monitor 6 um das erste Schwenkgelenk 17 im Wesentlichen ohne eine Entfernungsänderung zum Bediener 4 verschwenkt werden. Dadurch ist auch nach einem Verschwenken ein erneutes Einstellen des Monitors 6, abgesehen von der Verschwenkung selbst, für den Bediener 4 nicht erforderlich.

Der Sitz 5 weist hier und vorzugsweise ferner eine Armlehne 33 auf. Die Armlehne 33 kann Bedienelemente 34 zum Einstellen und/oder Abrufen von Betriebsparametern der landwirtschaftlichen Arbeitsmaschine 1 und/oder eines Anbaugerätes aufweisen. Die Bedienelemente 34 können beispielsweise ein Joystick und/oder Schaltelement umfassen. In einem alternativen Ausführungsbeispiel kann vorgesehen sein, dass die Halteeinrichtung 8 an der Armlehne 33 befestigt ist. Auch dann ergibt sich eine besonders ergonomische Anordnung des Monitors 6.

Die Armlehne 33 ist vorzugsweise horizontal und/oder vertikal verstellbar. Im Ausführungsbeispiel und bevorzugt ist der Monitor 6 separat von der Armlehne 33 verstellbar und ggf. auch die Armlehne 33 separat vom Monitor 6.

### Bezugszeichenliste

- 1: Landwirtschaftliche Arbeitsmaschine
- 2: Kabine
- 3: Arbeitsplatz
- 4: Bediener
- 5: Sitz
- 5a: Feststehender Teil
- 5b: Verstellbarer Teil
- 6: Monitor
- 7: Arbeitsorgan
- 7a: Schneidwerk
- 7b: Dreschwerk
- 7c: Reinigungseinrichtung
- 8: Halteeinrichtung
- 9: Fenster
- 10: Feldbestand
- 11: Kamera
- 11a: Rückfahrkamera
- 12: Korntank
- 13: Überladerohr
- 14: Hauptrechner
- 15: Lineareinheit
- 15a: Führungsschiene
- 15b: Führungsschiene
- 16: Hebel
- 17: Erstes Schwenkgelenk
- 18: Zweites Schwenkgelenk
- 19: Tragarm
- 20: Kabelkanal
- 21: Kugelgelenk
- 22: Tragarm
- 23: Kabelkanal
- 24: Einstellelement
- 25: Einstellelement
- 26: Einstellelement
- 27: Dämpfungselement
- 28: Kabinenfederung
- 29: Verstellschienen
- 30: Sitzfläche
- 31: Pedalerie
- 32: Lenkrad
- 33: Armlehne
- 34: Bedienelemente
- A: Abstand
- B: Boden
- H: Höhe
- L: Linearachse
- N: Neigung
- R: Fahrtrichtung
- S_{V}: Vertikale Schwenkachse
- S_{H}: Horizontale Schwenkachse

## Patentansprüche

1. Landwirtschaftliche Arbeitsmaschine mit einem Sitz (5) für einen Bediener (4) der landwirtschaftlichen Arbeitsmaschine (1), mit einem Monitor (6) zum Anzeigen von Betriebsdaten der landwirtschaftlichen Arbeitsmaschine (1) und/oder eines Anbaugeräts der landwirtschaftlichen Arbeitsmaschine (1) und mit einer verstellbaren Halteeinrichtung (8), welche den Monitor (6) hält und eine Verstellung des Monitors (6) gegenüber dem Sitz (5) in seiner Höhe (H), seiner Neigung (N) und seinem Abstand (A) erlaubt, **dadurch gekennzeichnet, dass** die Halteeinrichtung (8) an ihrem, dem monitorabgewandten Ende, ein erstes Schwenkgelenk (17) zum Schwenken des Monitors (6) relativ zum Sitz (5), um eine im Wesentlichen vertikale Schwenkachse (Sv) aufweist,
die Halteeinrichtung (8) danach ein zweites Schwenkgelenk (18) zum Schwenken des Monitors (6) um eine im Wesentlichen horizontale Schwenkachse (S_{H}) aufweist, die Halteeinrichtung (8) als letztes kinematisches Verstellglied eine Lineareinheit (15) aufweist, mittels welcher die Höhe (H) des Monitors (6) translatorisch entlang einer Linearachse (L) verstellbar ist, sodass der Monitor (6) von einer ersten Position in eine sich in der Höhe zur ersten Position unterscheidende zweite Position verstellbar ist, in der der Monitor (6) zur ersten Position parallelverschoben ist.

2. Landwirtschaftliche Arbeitsmaschine nach Anspruch 1, **dadurch gekennzeichnet, dass** der Monitor (6) als Touchscreen-Monitor ausgebildet ist, mittels welchem Betriebsdaten der landwirtschaftlichen Arbeitsmaschine (1) und/oder eines Anbaugeräts einstellbar und/oder abrufbar sind.

3. Landwirtschaftliche Arbeitsmaschine nach einem der vorhergehenden Ansprüche, **dadurch gekennzeichnet, dass** die Lineareinheit (15) einen Hebel (16) zum Verriegeln und Entriegeln der Lineareinheit (15) aufweist.

4. Landwirtschaftliche Arbeitsmaschine nach einem der vorhergehenden Ansprüche, **dadurch gekennzeichnet, dass** die Halteeinrichtung (8) ein Kugelgelenk (21) zum Verstellen der Neigung (N) des Monitors (6) gegenüber dem Sitz (5) aufweist.

5. Landwirtschaftliche Arbeitsmaschine nach einem der vorhergehenden Ansprüche, **dadurch gekennzeichnet, dass** mindestens eines der Schwenkgelenke (17, 18) und/oder das Kugelgelenk (21) reibschlüssig im Betrieb der landwirtschaftlichen Arbeitsmaschine (1) den Monitor (6) in seiner Position relativ zum Sitz (5) hält bzw. halten und dass dieses bzw. diese ohne das Lösen von Stellelementen verstellbar ist bzw. sind.

6. Landwirtschaftliche Arbeitsmaschine nach einem der vorhergehenden Ansprüche, **dadurch gekennzeichnet, dass** die Reibkraft in mindestens einem der Schwenkgelenke (17, 18) und/oder dem Kugelgelenk (21) jeweils mittels eines Einstellelements (24, 25, 26) einstellbar ist.

7. Landwirtschaftliche Arbeitsmaschine nach einem der vorhergehenden Ansprüche, **dadurch gekennzeichnet, dass** die Halteeinrichtung (8) einhändig verstellbar ist.

8. Landwirtschaftliche Arbeitsmaschine nach einem der vorhergehenden Ansprüche, **dadurch gekennzeichnet, dass** der Sitz (5) ein Dämpfungselement (27) zum Abfedern von Bodenunebenheiten aufweist und dass die Halteeinrichtung (8) am Sitz (5) vertikal oberhalb des Dämpfungselements (27) befestigt ist.

9. Landwirtschaftliche Arbeitsmaschine nach einem der vorhergehenden Ansprüche, **dadurch gekennzeichnet, dass** der Sitz (5) einen feststehenden Teil (5a) und einen vertikal darüber angeordneten verstellbaren Teil (5b) aufweist und dass der verstellbare Teil (5b) auf Verstellschienen (29) verstellbar ist, wobei das erste Schwenkgelenk (17) im Bereich der Verstellschienen (29) am feststehenden Teil (5a) oder am verstellbaren Teil (5b) des Sitzes (5) angeordnet ist.

10. Landwirtschaftliche Arbeitsmaschine nach einem der vorhergehenden Ansprüche, **dadurch gekennzeichnet, dass** der Sitz (5) eine Armlehne (33) aufweist und die Halteeinrichtung (8) an der Armlehne (8) befestigt ist.

11. Landwirtschaftliche Arbeitsmaschine nach einem der Ansprüche 1 bis 9, **dadurch gekennzeichnet, dass** der Sitz (5) eine Armlehne (33) aufweist und dass die Armlehne (33) horizontal und/oder vertikal verstellbar ist und der Monitor (6) separat von der Armlehne (33) verstellbar ist.

## Claims

1. An agricultural working machine comprising a seat (5) for an operator (4) of the agricultural working machine (1), a monitor (6) for displaying operating data of the agricultural working machine (1) and/or an attachment of the agricultural working machine (1), and an adjustable holding device (8) which holds the monitor (6) and allows adjustment of the monitor (6) with respect to the seat (5) in respect of its height (H), its inclination (N) and its spacing (A), **characterised in that** at its end remote from the monitor the holding device (8) has a first pivotal joint (17) for pivoting of the monitor (6) relative to the seat (5) about a substantially vertical pivot axis (S_{V}), the holding device (8) further comprises a second pivotal joint (18) for pivoting of the monitor (6) about a substantially horizontal pivot axis (S_{H}), the holding device (8) as the last kinematic adjusting member has a linear unit (15), by means of which the height (H) of the monitor (6) is adjustable with a translatory movement along a linear axis (L) so that the monitor (6) is adjustable from a first position into a second position which is different in height from the first position and in which the monitor (6) is displaced parallel to the first position.

2. An agricultural working machine according to claim 1 **characterised in that** the monitor (6) is in the form of a touchscreen monitor, by means of which operating data of the agricultural working machine (1) and/or an attachment can be adjusted and/or retrieved.

3. An agricultural working machine according to one of the preceding claims **characterised in that** the linear unit (15) has a lever (16) for locking and unlocking the linear unit (15).

4. An agricultural working machine according to one of the preceding claims **characterised in that** the holding device (8) has a ball joint (21) for adjustment of the inclination (N) of the monitor (6) with respect to the seat.

5. An agricultural working machine according to one of the preceding claims **characterised in that** at least one of the pivotal joints (17, 18) and/or the ball joint (21) holds or hold the monitor (6) in its position relative to the seat (5) in frictionally locking relationship in operation of the agricultural working machine (1) and said joint or joints is or are adjustable without the release of adjusting elements.

6. An agricultural working machine according to one of the preceding claims **characterised in that** the friction force in at least one of the pivotal joints (17, 18) and/or the ball joint (21) is respectively adjustable by means of an adjusting element (24, 25, 26).

7. An agricultural working machine according to one of the preceding claims **characterised in that** the holding device (8) is adjustable with one hand.

8. An agricultural working machine according to one of the preceding claims **characterised in that** the seat (5) has a damping element (27) for absorbing ground unevenness and the holding device (8) is fixed to the seat (5) vertically above the damping element (27).

9. An agricultural working machine according to one of the preceding claims **characterised in that** the seat (5) has a stationary part (5a) and an adjustable part (5b) arranged vertically thereabove and the adjustable part (5b) is adjustable on adjustment rails (29), wherein the first pivotal joint (17) is arranged in the region of the adjusting rails (29) at the stationary part (5a) or at the adjustable part (5b) of the seat (5).

10. An agricultural working machine according to one of the preceding claims **characterised in that** the seat (5) has an armrest (33) and the holding device (8) is fixed to the armrest (33).

11. An agricultural working machine according to one of claims 1 to 9 **characterised in that** the seat (5) has an armrest (33) and the armrest (33) is adjustable horizontally and/or vertically and the monitor (6) is adjustable separately from the armrest (33).

## Revendications

1. Machine de travail agricole comprenant un siège (5) pour un utilisateur (4) de la machine de travail agricole (1), comprenant un moniteur (6) pour afficher des données d'exploitation de la machine de travail agricole (1) et/ou d'un outil rapporté de la machine de travail agricole (1) et comprenant un équipement de maintien réglable (8) qui maintient le moniteur (6) et permet un réglage du moniteur (6) par rapport au siège (5) dans sa hauteur (H), dans son inclinaison (N) et dans son éloignement (A), **caractérisée en ce que** l'équipement de maintien (8) comporte à son extrémité opposée au moniteur une première articulation pivotante (17) pour faire pivoter le moniteur (6) par rapport au siège (5) autour d'un axe de pivotement sensiblement vertical (S_{V}), l'équipement de maintien (8) comporte ensuite une deuxième articulation pivotante (18) pour faire pivoter le moniteur (6) autour d'un axe de pivotement sensiblement horizontal (S_{H}), l'équipement de maintien (8) comporte comme dernier élément de réglage cinématique une unité linéaire (15) au moyen de laquelle la hauteur (H) du moniteur (6) peut être réglée en translation le long d'un axe linéaire (L) de sorte que le moniteur (6) est réglable depuis une première position jusqu'à une seconde position qui diffère en hauteur de la seconde position et dans laquelle le moniteur (6) est décalé parallèlement par rapport à la première position.

2. Machine de travail agricole selon la revendication 1, **caractérisée en ce que** le moniteur (6) est conformé en moniteur à écran tactile au moyen duquel des données d'exploitation de la machine de travail agricole (1) et/ou d'un outil rapporté peuvent être réglées et/ou consultées.

3. Machine de travail agricole selon une des revendications précédentes, **caractérisée en ce que** l'unité linéaire (15) comporte un levier (16) pour verrouiller et déverrouiller l'unité linéaire (15).

4. Machine de travail agricole selon une des revendications précédentes, **caractérisée en ce que** l'équipement de maintien (8) comporte une articulation à rotule (21) pour régler l'inclinaison (N) du moniteur (6) par rapport au siège (5).

5. Machine de travail agricole selon une des revendications précédentes, **caractérisée en ce qu'**au moins une des articulations pivotantes (17, 18) et/ou l'articulation à rotule (21) maintient, respectivement maintiennent, le moniteur (6) par liaison par friction dans sa position par rapport au siège (5) pendant le fonctionnement de la machine de travail agricole (1), et **en ce qu'**elle, respectivement elles, est, respectivement sont, réglables sans desserrer les éléments de réglage.

6. Machine de travail agricole selon une des revendications précédentes, **caractérisée en ce que** la force de friction dans au moins une des articulations pivotantes (17, 18) et/ou dans l'articulation à rotule (21) est réglable respectivement au moyen d'un élément de réglage (24, 25, 26).

7. Machine de travail agricole selon une des revendications précédentes, **caractérisée en ce que** l'équipement de maintien (8) est réglable d'une seule main.

8. Machine de travail agricole selon une des revendications précédentes, **caractérisée en ce que** le siège (5) comporte un élément amortisseur (27) pour amortir les inégalités du sol, et **en ce que** l'équipement de maintien (8) est fixé au siège (5) à la verticale au-dessus de l'élément amortisseur (27).

9. Machine de travail agricole selon une des revendications précédentes, **caractérisée en ce que** le siège (5) comporte une partie fixe (5a) et une partie réglable (5b) disposée à la verticale au-dessus, et **en ce que** la partie réglable (5b) est réglable sur des glissières de réglage (29), la première articulation pivotante (17) étant disposée dans la zone des glissières de réglage (29) sur la partie fixe (5a) ou sur la partie réglable (5b) du siège (5).

10. Machine de travail agricole selon une des revendications précédentes, **caractérisée en ce que** le siège (5) comporte un accoudoir (33), et l'équipement de maintien (8) est fixé à l'accoudoir (8).

11. Machine de travail agricole selon une des revendications 1 à 9, **caractérisée en ce que** le siège (5) comporte un accoudoir (33) et **en ce que** l'accoudoir (33) est réglable horizontalement et/ou verticalement et le moniteur (6) est réglable séparément de l'accoudoir (33).
